Europäisches Patentamt

European Patent Office

Office européen des brevets

(11) Publication number: **0 049 800**
**B1**

## EUROPEAN PATENT SPECIFICATION

(45) Date of publication of patent specification: **27.06.84**

(51) Int. Cl.³: **F 02 M 59/30**

(21) Application number: **81107713.0**

(22) Date of filing: **29.09.81**

(54) Fuel injection and control systems.

(30) Priority: **06.10.80 US 193983**
**06.10.80 US 193984**

(43) Date of publication of application:
**21.04.82 Bulletin 82/16**

(45) Publication of the grant of the patent:
**27.06.84 Bulletin 84/26**

(84) Designated Contracting States:
**DE FR GB**

(56) References cited:
**DE - A - 1 476 224**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD MOTOR COMPANY LIMITED**
**Eagle Way**
**Brentwood Essex CM13 3BW (GB)**
(84) **GB**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Schechter, Michael Moses**
**27686 Sutherland**
**Southfield Michigan 48076 (US)**

(74) Representative: **Ritzkowsky, Harald, Dipl.-Ing.**
**et al,**
**Ford-Werke Aktiengesellschaft Patentabteilung**
**Z/DRR-2 Ottoplatz 2**
**D-5000 Köln 21 (DE)**

Courier Press, Leamington Spa, England.

## Description

The invention relates to a fuel injection and control system for an automotive type internal combustion engine including a fuel injector assembly including a fuel injector of the spring closed, fuel pressure opened type, an electromagnetically operated fuel pump having a plunger movable through a pumping stroke upon energization of the electromagnetic means to increase the fuel pressure to a level sufficient to open the injector and through a fuel intake stroke upon deenergization of the electromagnetic means, a fluid pressure actuated fuel pump stroke rod being in cooperation with the plunger and movable to limit the stroke of the plunger as a function of changes in the fluid pressure to thereby vary the volume of fuel and timing of fuel injected through the injector, a source of fuel at a low supply pressure connected to the assembly supplying fuel to the plunger during the intake stroke thereof and a fuel flow return line for containing fuel leakage past the plunger.

A fuel injection and control system of the above mentioned type is disclosed in DE—A—1 476 224, whereby a separate fluid pressure line is necessary to actuate the fluid pressure actuated fuel pump stroke control rod. To regulate the pressure in this separate fuel pressure line several bellow like devices are necessary to provide a regulated pressure depending on engine operating conditions.

The object of the present invention is to avoid the mechanical expenditures connected with the separate fluid pressure line necessary in the prior art devices and to avoid the mechanical expenditures connected with the several bellow like devices for regulating the fluid pressure in this separate line.

According to the present invention the above mentioned disadvantages are avoided by a fuel injection and control system as disclosed in the characterizing part of Claim 1.

By arranging a fuel pressure actuated means in cooperation with the stroke control rod for actuating the same to various positions as a function of changes in the return fuel pressure line and by arranging an engine responsive electromagnetically control fuel pressure regulator connected to the return line for varying the return fuel pressure as a function of changes in engine operation conditions, to thereby vary the stroke of the pump plunger, a fuel injection and control system is provided with a minimum of mechanical expenditures which moreover by means of the electromagnetically controlled fuel pressure regulator can be more easily adapted to different types of engines by an appropriate electronic control.

According to Claim 2 further advantages features of the control system are disclosed thereas according to Claims 3 to 5 advantageous features of the unitary fuel injector assemblies are disclosed.

Other objects, features, and advantages of the invention will become more apparent upon reference to the succeeding detailed description thereof, and to the drawings illustrating the preferred embodiments thereof; wherein:

Figure 1 schematically illustrates a fuel injection and control system embodying the invention;

Figure 2 is an enlarged cross-sectional view of one of the unit fuel injectors shown in Figure 1;

Figure 3 is a cross-sectional view taken on a plane indicated by and viewed in the direction of the arrows of 3—3 of Figure 2;

Figure 4 is an enlarged cross-sectional view of the pressure regulator mechanism shown in Figure 1; and

Figures 5 and 6 are schematic block diagram representations of controls for various elements of the system shown in Figure 1 to control operation of the same.

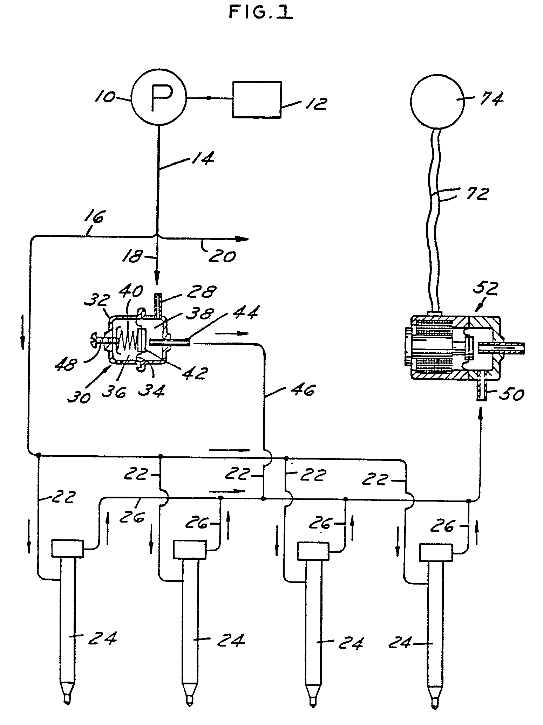

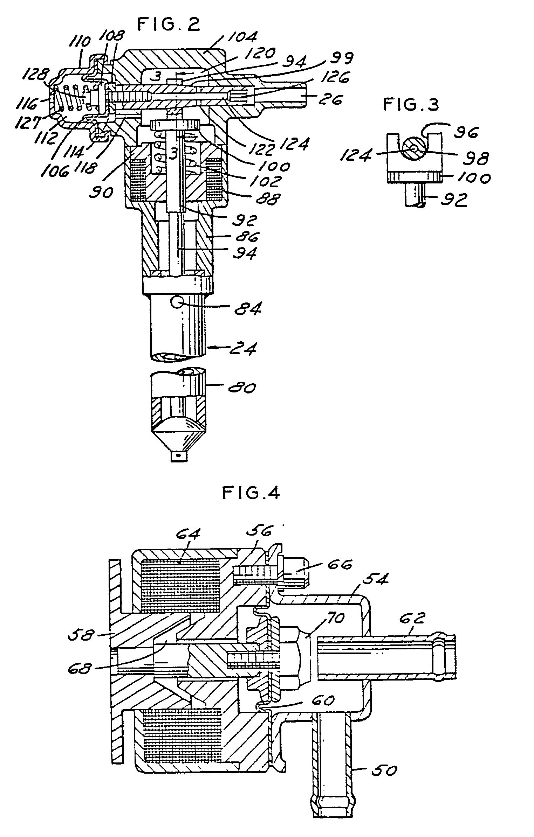

The fuel injection system shown in Figure 1 includes a main fuel supply pump 10 that draws fuel from a tank or reservoir 12 and delivers the same at a low pressure into a fuel supply line 14. Supply line 14 has three branches 16, 18 and 20. The line 16 supplies fuel continuously through four sub-branch lines 22 to four unit fuel injector assemblies 24. As will be described later, and as seen in Figures 2 and 3, each of the unit injector assemblies 24 includes a fuel injector, a plunger type pumping unit, a solenoid for actuating the plunger, and a stroke control means actuated by the level of the fuel pressure in a return line 26 connected to each of the unit injector assemblies, as shown.

The fuel supply branch line 20 is, as indicated, adapted to be connected to the main fuel injection pump of the system to supply fuel continuously thereto in an amount in excess of that required by the pump. As stated previously, this fuel injection system is particularly suitable for a prechamber type engine construction for applying a small controlled amount of fuel to the prechamber through the unit injector assemblies 24.

Fuel supply branch line 18 is shown as connected to the inlet 28 of a first fixed level pressure regulator 30. The purpose of this regulator 30 is to assure an adequate and constant supply fuel pressure to the unit injectors that is always higher than the fuel pressure in the return lines 26. In this case, the pressure regulator 30 consists of a casing 32 partitioned by an annular flexible diaphragm 34 into an atmospheric pressure chamber 36 and a fuel pressure chamber 38. A spring 40 normally biases a disc-type valve 42 towards the end of a stand pipe 44 to throttle communication of fuel from branch supply line 18 to a discharger line 46 connected to the fuel return lines 26. An adjustable screw mechanism 48 is provided for fixing the preload on spring 40 to thereby set the pressure in supply line 28 at a constant valve equal to the force of the spring 40. Any higher pressure will move the disc valve 42 leftwardly to uncover stand pipe 44 more and vent more of the fuel into return line 46 until the set pressure level is regained.

Each of the return lines 26 from the injector unit assemblies 24 is connected to the inlet 50 of a second variable pressure regulator unit 52 shown more clearly in Figure 4. This particular pressure regulator is controlled by a solenoid coil energizable in accordance with changing engine operating conditions. More particularly, pressure regulator 52 consists essentially of a three-piece assembly that includes a fuel chamber defining housing 54, the stationary core 56 of a solenoid assembly, and the moveable combination armature-valve mechanism 58 of the solenoid.

Hollow housing 54 is bolted to the annular stationary core 56 of the solenoid with the edges of an annular flexible diaphragm 60 secured therebetween. The housing contains an opening through which is inserted a stand pipe 62 constituting a fuel outlet that is adapted to be connected to tank 12 shown in Figure 1 to return fuel thereto leaking past the elements of the unit fuel injector assemblies 24 and vented from the pressure regulator device 30. The stationary core 56 in this case is secured to a solenoid coil 64 that surrounds the core and the moveable armature 58. An adjustable screw mechanism 66 is provided for adjusting the conventional gap 68 between the moveable and stationary parts of the solenoid, in a known manner. A valve element or piston 70 is shown screwed to the armature 58 of the solenoid through a hole in the annular diaphragm 60. Suitable wiring 72 (Figure 1) connects the solenoid coil 64 to a sensor unit 74 operably selectively connected to various parts of the internal combustion engine on which the injection system is installed.

In this case, the unit 74 could be a microprocessor unit receiving signals from various portions of the engine with respect to temperature, speed, pressure, etc. for converting the same into an electrical impulse signal that is then fed to the solenoid coil 64 at the desired time. This voltage signal will cause the armature 58 to move rightwardly towards the end of the stand pipe 62 to throttle the communication of return fuel from the inlet 50 through standpipe 62. When the pressure of the fuel return acting on diaphragm 60 equals the force of the armature pushing the valve element 70 in the opposite direction, then an equilibrium position will be obtained and the fuel pressure in line 50 will remain at that level. The pressure force will always be equal to the magnetic force of the solenoid, and since the magnetic force is a function of the current in the solenoid coil, varying the voltage applied to the solenoid coil wil, therefore, vary the pressure of the return fuel upstream of the pressure regulator unit 52. As will be understood shortly, varying the fuel return pressure will vary the stroke of the pumping plungers of the unit fuel injector assemblies 24.

More specifically, Figures 2 and 3 show the construction of the unit injector assemblies 24. The lower part of each assembly 24 contains a conventional fuel injector 80 having a fuel pressure actuated valve that opens outwardly when the fuel pressure reaches a sufficient level. The details of construction of this particular injector are not given since they are known and believed to be unnecessary for an understanding of the invention. Suffice it to say that it could be constructed as fully shown and described in U.S. 3,542,293, Bishop et al assigned to the assignee of this invention, with a tension spring unit for maintaining the valve closed below a predetermined fuel pressure.

Fuel injector 80 at its upper end contains a fuel inlet 84 that is connected to the fuel pressure branch supply line 22 shown in Figure 1. Although not shown, a check valve would be included in the line to permit entry of fuel into inlet 84 but closure of the inlet upon actuation of the pump plunger unit to be described to prevent the return of fuel out of the supply line.

The unit injector 80 is inserted into the lower open end of a second housing 86 that encloses a solenoid coil 88 secured to an annular stationary core element 90. The latter surrounds a reciprocable armature element 92 that is formed integral with a plunger 94 to constitute a fuel pumping unit. The upper end of the pump plunger 94 is, as seen in Figure 3, of a forked shape to provide a yoke 96 that receives therein the cylindrical portion of a stroke control rod 98. The plunger-armature 92 also is formed with a flange 100 that constitutes a seat for a spring 102 that lightly biases the plunger-armature upwardly into engagement with the bottom surface of control rod 98.

The control rod 98 in this case determines the stroke of the plunger 94 and therefore controls the volume of fuel injected through the unit injector 80 at any particular time. The control rod 98 is slideably movable essentially at right angles to the axis of plunger 94, and moves in a housing 104. It is tapered longitudinally, as shown, providing a conical surface 99. The control rod is moveable axially to vary the point of engagement with the fork or yoke 96 of the pump plunger to thereby vary the distance the plunger can travel upwardly on its fuel intake stroke.

The leftward (as seen in Figure 2) end of control rod 98 is fixed to an annular flexible diaphragm 106 by means of a pair of nut like members 108. The diaphragm partitions a housing cap 110 into an atmospheric air chamber 112 and a fuel pressure chamber 114. Chamber 112 is connected to atmosphere through a vent hole 116, while chamber 114 is connected to the fuel in the pump plunger housing through a port 118 connected to the upper chamber 120 containing fuel leaking between the armature and the stationary core of the solenoid. The fuel in chamber 120 passes out to the drain or return line 26 through an annulus 122 connected to an axial passage 124 in the control rod 98 open at its end to the return passage. Opposite ends of the control rod are formed with hex-head sockets 126 and 128 for insertion of a Allen-head type wrench to adjust the axial position of the control rod relative to the nut like retaining members 108. The purpose of this is to permit initial calibration of all unit injector assemblies for identical fuel delivery of the same reference return fuel pressure level. It will be clear that a change in the pressure level of the return fuel in line 26 will be reflected against the right side of the diaphragm 106 to oppose the force of the atmospheric pressure in chamber 112 and the force of a spring 127 biasing the control rod 98 to the right, to vary the position of the control rod with reference to the fork or yoke 96 of the pump plunger. Accordingly, the travel distance during the intake stroke of plunger 94 will be varied, thereby controlling the amount of fuel intake and controlling the volume of fuel ultimately injected during the pumping stroke.

While not shown, the solenoid coil 88 would be connected electrically to the engine microprocessor or other suitable control element 74 for energization at the desired time to move the pump plunger or armature 94 downwardly to pressurize the fuel in the unit injector 80. The fuel fills the injector volume underneath the plunger 94 and, therefore, is compressed during downward movement of the plunger to a level above the opening pressure level of the injector, whereby the volume of fuel desired is injected into the engine combustion chamber proper. The timing of the injection will be controlled by the timing of the solenoid pulses as a function of engine speed, load and other parameters. The amount of fuel injected, as stated previously, is determined by the plunger stroke, which can be varied by varying the upper starting position of the plunger 94 while its lower position stop remains fixed.

For the above description, it will be seen that the unit injector assembly of the invention provides a precise control of the injection of a small quantity of fuel over a predetermined period, which is quite suitable as the fuel supply for a prechamber type combustion chamber. Of course, a system similar to the one described can also be used for control of the fuel to the main combustion chamber. The basic difference in this particular case would be the larger amounts of fuel that are needed for a main combustion chamber and a greater accuracy of fuel delivery control to assure the proper air to fuel ratio control. The larger amounts of fuel injected can be handled by increasing the diameter and the stroke of the plunger 94, and the use of a more powerful solenoid. The accuracy of this system can be improved by using a closed loop control electronic system, as compared with an open loop system normally used for the system already described.

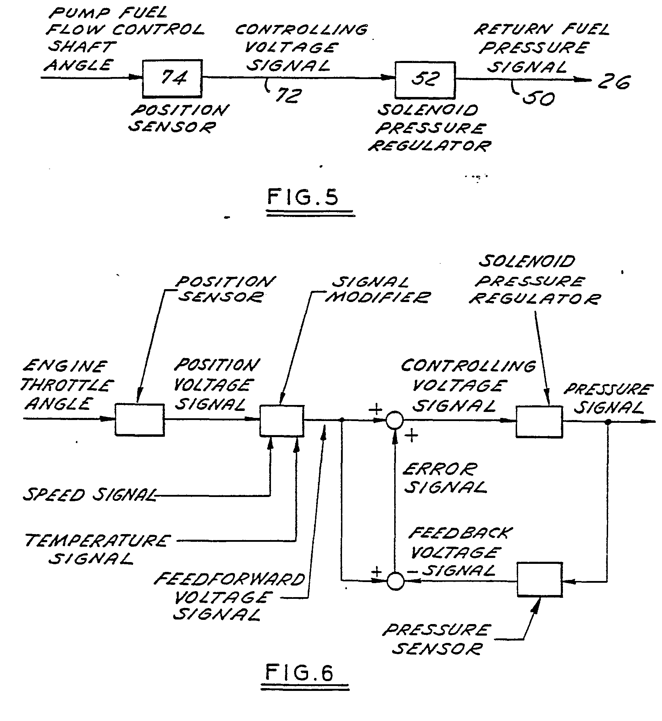

More particularly, Figures 5 and 6 illustrate examples of open and closed loop control systems, respectively. Figure 5 is a block diagram of the open loop control system for specific use with a torch ignition or prechamber type engine construction. Figure 1 illustrates the fuel supply branch line 20 as being connected to a main fuel injection pump that supplies fuel to the main combustion chamber. This pump could be as fully shown and described in U.S. 4,197,059, Simko, assigned to the assignee of this invention. It shows a fuel pump flow control lever whose rotational position indicates the quantity of fuel flowing from the pump. The block diagram of Figure 5 in this application indicates an input from the pump control shaft of the main fuel injection pump (such as is shown in Simko) connected to a position sensor that develops a controlling voltage signal representing the control shaft angle, which is then converted into a fuel pressure signal by the solenoid controlled pressure regulator 52 shown in Figure 1 to thereby control the level of the return fuel pressure signal in line 26 connected to each of the fuel injection unit assemblies 24.

Figure 6 shows a block diagram of the closed loop control system that could be used for controlling the injection of fuel into a main combustion chamber type of construction. In this case, the angle of the throttle valve located in the air induction pipe leading to the engine combustion chamber is sensed by the position sensor indicated, which converts the same into a voltage signal that, in this case, could be modified in accordance with the speed and temperature of the engine, for example, to produce a signal that is shaped for proper relationship of the torque and throttle angle. The resulting feedforward voltage signal represents the required schedule of the fuel pressure signal in return line 26 that controls the fuel delivery stroke in all unit injector assemblies 24. In this case, a pressure sensor is installed in the return fuel line to generate a feedback voltage signal that is compared to the feedforward voltage signal, as indicated. The resulting error signal is then added to the feedforward signal, modifying it into a controlling voltage signal applied to the terminals of the solenoid pressure regulator 52. So long as the pressure signal corresponds to the required schedule, the feedback and feedforward voltage signals would be equal, and the error signal zero; the controlling voltage signal, therefore, is equal to the feedforward signal. Any deviation from the required value of the pressure signal would then produce a positive or negative error signal which would modify the controlling voltage signal to minimize the deviation.

The operation is believed to be clear from the above description and a consideration of the drawings and therefore will not be given in detail. Suffice it to say that the supply pump 10 always supplies an excess of fuel through the system and through the pressure regulator valve unit 30 so as to provide a return fuel flow in line 46 and in the return lines 26 to the pressure regulator unit 52. The unit injector assemblies are filled with fuel supplied through the inlet 84 at a low pressure level. Energization of the solenoid 88 causes the plunger 94 to move downwardly to compress the fuel in the injector 80 and open the same to inject fuel out into the engine proper. The stroke or volume of fuel injected is determined by the axial position of the control rod 98 to vary the location of the conical surface of the rod with respect to the fork or yoke 96 to limit the upper or intake stroke of the plunger. The variance of the return fuel pressure in line 26 will determine the position of the control rod and will, therefore, determine the volume of fuel injected. In turn, the signal from the microprocessor unit 74 to the solenoid controlled pressure regulator 52 will vary the backpressure or return pressure in line 26 to thereby vary the stroke control in accordance with the demand of the engine.

## Claims

1. A fuel injection and control system for an automotive type internal combustion engine including a fuel injector assembly including a fuel injector of the spring closed, fuel pressure opened type, an electromagnetically operated fuel pump having a plunger movable through a pumping stroke upon energization of the electromagnetic means to increase the fuel pressure to a level sufficient to open the injector and through a fuel intake stroke upon deenergization of the electromagnetic means, a fluid pressure operated fuel pump stroke control rod being in cooperation with the plunger and movable to limit the stroke of the plunger as a function of changes in the fluid pressure to thereby vary the volume of fuel and timing of fuel injected through the injector, a source of fuel at a low supply pressure connected to the assembly supplying fuel to the plunger during the intake stroke thereof, a fuel flow return line for containing fuel leakage past the plunger, characterized in that, a fuel pressure actuated means (106) applying the return fuel pressure present in said fuel flow return line to the stroke control rod (98) for actuating the same to various positions as a function of changes in the return fuel pressure, and an engine responsive electromagnetically controlled fuel pressure regulator (52) connected to the return line (26) for varying the return fuel pressure as a function of changes in engine operation to thereby vary the stroke of the pump plunger (94).

2. A system as in Claim 1, characterized in that, a second fuel pressure regulator (30) in the return line (26) being operable to establish the low supply pressure and maintain a lower minimum level fuel return pressure, the first mentioned pressure regulator (52) including a solenoid type valve (70) movable upon energization of the solenoid (64) to restrict the return fuel line (26) and thereby vary the return fuel pressure upstream thereof at the stroke control means, and means responsive to changing engine operation to vary the voltage to the solenoid (64) to vary the return fuel pressure to levels above the minimum.

3. A system as in Claim 1, characterized in that, the stroke control rod (98) including a conical surface (99) tapering along a portion of its length and being variably movable into the path of movement of the plunger (94) to restrict the travel of the plunger (94).

4. A system as in Claim 3, characterized in that, a plurality of unit fuel injector assemblies (24) corresponding in number to the number of cylinders of the engine each connected individually to the discharge line of the source of fuel (10) at low supply pressure and each comprising separate stroke control rode (98) operable by fuel pressure actuated means (106) cooperating with each of the pump plunger (94) and all connected to the return line (26).

5. A unit fuel injector assembly according to any one of Claims 1 to 4, characterized in that, the unit including a multi-pieced housing, a first housing portion extending longitudinally and containing the fuel injector (80), a second housing portion (86) extending longitudinally from the first housing portion in an end-to-end relationship and containing the plunger (94) axailly aligned with the fuel injector (80) and enclosed by the solenoid (88), a third housing portion (104) contiguous to the second portion (86) at the end thereof opposite to the first portion and extending transversely to the axis of the plunger (94) and injector (80), one end of the third portion (104) containing a fluid pressure operated servo (110) having a movable diaphragm (106) biased by a spring (127) to one position and movable by fluid under pressure in the opposite direction, the movable control rod (98) extending longitudinally through the third housing portion (104) and being connected to the diaphragm (106).

## Patentansprüche

1. Brennstoffeinspritz- und Regelsystem für Kraftwagenverbrennungsmotoren bestehend aus einer Brennstoffeinspritzvorrichtung mit einer Brennstoffeinspritzdüse welche durch Federdruck geschlossen und durch den Brennstoffdruck geöffnet wird, mit einer elektromagnetisch betätigten Brennstofffförderpumpe deren Kolben durch Erregung der elektromagnetischen Mittel über einen Pumphub bewegbar ist um den Brennstoffdruck soweit zu erhöhen, dass die Brennstoffdüse geöffnet wird, und durch Abschaltung der elektromagnetischen Mittel über einen Brennstoffansaughub bewegbar ist, wobei ein durch den Flüssigkeitsdruck betätigter Stössel zur Regelung des Kolbenhubes mit dem Kolben zusammenwirkt und bewegbar ist um den Kolbenhub in Abhängigkeit von Veränderungen des Flüssigkeitsdruckes zu begrenzen und somit das Brennstoffvolumen und den Zeitpunkt des Einspritzens des Brennstoffes durch die Einspritzdüse zu verändern, mit einer Brennstoffquelle unter niedrigem Druck die mit den Baugruppen verbunden ist, welche dem Kolben während seines Ansaughubes Brennstoff zuführen, sowie einer Brennstoffrücklaufleitung für die Aufnahme des Leckbrennstoffes der längs des Kolbens entweicht, dadurch gekennzeichnet, dass ein Element (106), welches durch den Brennstoffdruck betätigt wird, den in der genannten Rücklaufleitung vorherrschenden Rücklaufflüssigkeitsdruck dem Hubregelstössel (98) vermittelt um diesen in Abhängigkeit von Aenderungen des Rücklaufflüssigkeitsdrucks in verschiedene Stellungen zu bringen, und dass ein, durch den Motor gesteuerter, elektromagnetischer Brennstoffdruckregler (52) mit der Rücklaufleitung (26) verbunden ist um den Rücklaufdruck in Abhängigkeit von den Betriebsbedingungen des Motors zu verändern und dadurch den Hub des Pumpenkolbens (94) zu regeln.

2. Ein System nach Anspruch 1, dadurch gekennzeichnet, dass ein zweiter Brennstoffdruckregler (30) in der Rücklaufleitung (26) dazu dient, einen niedrigen Förderdruck aufzubauen und einem niedrigeren minimalen Brennstoffrücklaufdruck aufrechtzuerhalten, wobei der erste bereits erwähnte Druckregler (52) mit einem Magnetventil (70) versehen ist, welches durch die Solenoidspule (64) gesteuert wird um die Rücklaufleitung (26) zu drosseln und somit den oberhalb der letzteren herrschenden Rücklaufbrennstoffdruck bei den Hubsteuermitteln zu verändern und Mittel vorhanden sind welche auf Aenderungen der Betriebsbedingungen des Motors ansprechen, die Spannung an der Solenoidspule (64) entsprechend varändern und somit den Brennstoffrücklaufdruck oberhalb eines minimalen Wertes halten.

3. Ein System nach Anspruch 1, dadurch gekennzeichnet, dass der Hubregelstössel (98) mit einer konischen Fläche (99) welche sich über einen Teil der Gesamtlänge verengt versehen ist wobei der Stössel zu einem veränderlichen Mass in die Laufbahn des Kolbens (94) eindringen kann, um so den Hub des Kolbens (94) zu begrenzen.

4. Ein System nach Anspruch 3, gekennzeichnet durch, mehrere Brennstoffeinspritzeinheiten (24) deren Anzahl derjenigen der Zylinder des Motors entspricht, wobei jede einzeln mit der Druckentlastungsleitung des Niderdruckbrennstoffbehälters (10) verbunden und jeweils mit einem Hubregelstössel (98) versehen ist, welcher durch das Element (106) mittels des Brennstoffdruckes betätigt wird wobei jedes Element (106) mit seinem Pumpenkolben (94) zusammenwirkt und alle mit der Rücklaufleitung (26) verbunden sind.

5. Brennstoffeinspritzeinheit nach einem der Ansprüche 1 bis 4, dadurch gekennzeichnet, dass das Gehäuse der Einjeit aus mehreren Teilen besteht wobei der erste Gehäuseteil sich in Längsrichtung erstreckt und die Brennstoffeinspritzdüse (80) umfasst, dass ein zweiter Gehäuseteil (86) sich in Längsrichtung an den ersten Gehäuseteil anschliesst und den Kolben (94) umschliesst welcher mit der Einspritzdüse (80) axial ausgerichtet und von der Solenoidspule (88) umgeben ist, dass ein dritter Gehäuseteil (104) in Fortsetzung zum zweiten Teil (86) gegenüber dem ersten Teil angebracht ist und sich quer zur Achse des Kolbens (94) und der Einspritzdüse (80) ersteckt, wobei das eine Ende des dritten Gehäuseteiles (104) einen durch Flüssigkeitsdruck betätigten Servomechanismus (110) mit einer biegsamen Membrane (106) enthält welche durch eine Feder (127) in eine bestimmte Position gebracht wird und durch Flüssigkeitsdruck in der entgegengesetzten Richtung verschoben werden kann, wobei der bewegliche Regelstössel (98) sich in Längsrichtung durch den dritten Gehäuseteil (104) ersteckt und mit der Membrane (106) verbunden ist.

**Revendications**

1. Système d'injection et de commande de carburant pour un moteur d'automobile du type à combustion interne, comprenant un ensemble injecteur (24) de carburant incluant un injecteur (80) de carburant du type fermé par ressort, ouvert par la pression du carburant, une pompe à carburant commandée électromangétiquement ayant un piston mobile (94) effectuant une course de pompage lors de l'activation des moyens électromangétiques pour augmenter la pression du carburant jusqu'à un niveau suffisant pour ouvrir l'injecteur (80) et effectuant une course d'aspiration de carburant lors de la désactivation des moyens électromagnétiques, une tige de commande (98) du mouvement de la pompe à carburant activée par la pression du carburant coopérant avec le piston (94) et étant mobile pour limiter la course du piston en fonction des variations de pression du carburant pour ainsi faire varier le volume et la programmation dans le temps du carburant injecf à travers l'injecteur (80), une source de carburant à faible pression d'alimentation reliée à l'ensemble fournissant le carburant au piston (94) pendant la course d'admission, une conduite (26) de retour d'écoulement de carburant pour recueillir le carburant de fuite du piston, caractérisé en ce que des moyens (106) activés par la pression du combustible appliquant la pression du combustible de retour présent dans ladite conduite de retour (26) d'écoulement de carburant à la tige de commande (98) du mouvement pour assigner à cette dernière différentes positions en fonction des changements dans la pression du carburant de retour, et un régulateur (52) de pression de carburant électromagnetiquement commandé sensible au moteur, relié à la conduite de retour (26) pour faire varier la pression du carburant de

**0 049 800**

retour en fonction des variations de fonctionnement du moteur pour ainsi faire varier la course du piston (94) de la pompe.

2. Système selon la revendication 1, caractérisé en ce qu'il comprend un second régulateur de pression (30) dans la conduite de retour (26), susceptible d'établir une faible pression d'alimentation et de maintenir une pression de retour de carburant d'un niveau minimum plus bas, le premier régulateur de pression (52) ayant une soupape du type à électro-aimant (70) mobile lors de l'activation de k'électro-aimant (64) pour resteindre la conduite de retour (26) de carburant et ainsi faire varier la pression du carburant de retour en amount des moyens de commande de la tige, et des moyens sensibles à un changement dans le fonctionnement du moteur pour faire varier la tension de l'électro-aimant afin de modifier la pression du carburant de retour à des niveaux supérieurs au minimum.

3. Système selon la revendication 1, caractérisé en ce que la tige de commande du mouvement (98) comporte une surface conique (99) effilant cette tige sur une partie de sa longeur et étant mobile de manière variable dans le chemin de dèplacement du piston (94) pour restreindre le mouvement du piston.

4. Système selon la revendication 3, caractérisé en ce qu'il comprend une série d'ensembles injecteurs de carburant (24) correspondant au nombre de cylindres du moteur, chacun étant relié individuellement à la conduite de décharge de la source de carburant (10) à faible pression d'alimentation et chacun comportant des tiges de commande (98) du déplacement pouvant être actionnées par des moyens (106) activés par la pression du carburant coopérant avec chacun des pistons de pompe (94) et tous reliés à la conduite de retour (26).

5. Ensemble injecteur de carburant conforme à l'une quelconque des revendications 1 à 4, caractérisé en ce qu'il comprend un carter multi-logments, un premier logement s'étendant longitudinalement et contenant l'injecteur de carburant (80), un second logement (86) s'étendant longitudinalement bout à bout avec le premier logement et contenant le piston (94) aligné axialement par rapport à l'injecteur de carburant (80) et entouré par l'électro-aimant (88), un troisième logement continu au deuxième (86) du côté opposé au premier logement et s'étendant transversalement par rapport à l'axe du piston (94) et de l'injecteur (80), une extrémité du troisième logement (104) contenant un servomécanisme (110) activé par la pression du fluide ayant un diaphragme mobile (106) repoussé par un ressort (127) dans une position et déplaçable sous la pression du fluide dans la direction opposé, la tige de commande mobile (98) s'étendant longitudinalement à travers le troisième logement (104) et étant reliée au diaphragme (106).

FIG.1

0 049 800

FIG. 2

FIG.3

FIG.4

2

PUMP FUEL FLOW CONTROL SHAFT ANGLE — 74 POSITION SENSOR — CONTROLLING VOLTAGE SIGNAL 72 — 52 SOLENOID PRESSURE REGULATOR — RETURN FUEL PRESSURE SIGNAL 50 — 26

FIG.5

POSITION SENSOR — SIGNAL MODIFIER — SOLENOID PRESSURE REGULATOR

ENGINE THROTTLE ANGLE — POSITION VOLTAGE SIGNAL — CONTROLLING VOLTAGE SIGNAL — PRESSURE SIGNAL

SPEED SIGNAL

TEMPERATURE SIGNAL

FEEDFORWARD VOLTAGE SIGNAL

ERROR SIGNAL

FEEDBACK VOLTAGE SIGNAL

PRESSURE SENSOR

FIG.6

3